# EUROPEAN PATENT SPECIFICATION

(11) **EP 4 421 542 B1**
(45) Date of publication and mention of the grant of the patent: **14.10.2026**
(21) Application number: 23158777.5
(22) Date of filing: 27.02.2023
(51) Int. Cl.: G02B 1/02, G02B 3/00

(54) **MID-INFRARED REFRACTIVE OPTICAL ELEMENT**
OPTISCHES ELEMENT MIT MITTELINFRAROTBRECHUNG
ÉLÉMENT OPTIQUE RÉFRACTIF DANS L'INFRAROUGE MOYEN

(43) Date of publication of application: 28.08.2024
(73) Proprietor: Quantune Technologies GmbH, 12489 Berlin (DE)
(72) Inventor: KISCHKAT, Jan, 12489 Berlin (DE)
(74) Representative: Schulz Junghans Patentanwälte PartGmbB

(56) References cited:
- EP-A1- 2 256 812
- US-A1- 2022 281 194
- TUOHINIEMI MIKKO ET AL: "Infrared Spectroscopy Study of a Poly-Silicon Film for Optimizing the Boron-Implanting Dose", JOURNAL OF MICROELECTROMECHANICAL SYSTEMS, IEEE SERVICE CENTER, US, vol. 22, no. 5, 1 October 2013 (2013-10-01), pages 1207 - 1212, XP011528336, ISSN: 1057-7157, [retrieved on 20130927], DOI: 10.1109/JMEMS.2013.2262580
- OH MIN-SUK ET AL: "Preparation and characterization of the As40Se60 and As38.8Se61.2 glasses with high quality for the single mode IR glass fiber", OPTICAL FIBER TECHNOLOGY, vol. 21, 1 January 2015 (2015-01-01), AMSTERDAM, NL, pages 176 - 179, XP093064752, ISSN: 1068-5200, DOI: 10.1016/j.yofte.2014.11.004
- ANONYMOUS: "Thorlabs.com - Germanium Windows", 18 July 2023 (2023-07-18), XP093064882, Retrieved from the Internet <URL:https%3A%2F%2Fwww.thorlabs.de%2FNewGroupPage9_PF.cfm%3FObjectGroup_ID%3D3980> [retrieved on 20230718]

## Description

The invention relates to a refractive optical element, particularly a micro-lens or a retro-reflector for a laser, an array of such refractive optical elements as well as a method of manufacture for one or more refractive optical elements.

Mid-infrared applications in the wavelength range of 6 µm to 14 µm and longer are important for a number of reasons ranging from trace gas detection and biomedical spectroscopy in the fingerprint region of many molecules to illumination in the thermal range of 8 µm to 12 µm or any type of illumination or communication in the infrared atmospheric window at 8.5 µm to 13 µm.

Very compact light sources such as the quantum cascade laser (QCL) are becoming widespread, potentially enabling very compact and cost-efficient spectrometers or illumination sources for this mid-infrared wavelength range and resulting in a plethora of devices with large economic potential. These applications require a number of specially designed optics such as lenses, particularly aspheric lenses for collimation and beam shaping.

In the art, mid-infrared lenses for the 6.5 µm to 14 µm range are typically made from materials such as germanium, the chalcogenide glasses, or zinc selenide, and could be made from any other material that is sufficiently transparent, such as gallium arsenide or indium phosphide.

Due to the required spectral transmission properties for such mid-infrared lenses, these lenses are not typically made from silicon, because of absorption bands that render silicon insufficiently transparent. For instance, in the range between 8 µm to 10 µm, silicon has an absorption band centered at approximately 9 µm that is due to a multi-phonon absorption for the case of high-purity float-zone silicon. If cheaper Czochralski silicon is used, there is an even stronger absorption band centered at the same position due to silicon-oxygen vibrational modes. Even in the case of the highest-purity float-zone silicon, the absorption coefficient in the vicinity of 9 µm is approximately 1 cm⁻¹, which is insufficient for most applications that require the light in this wavelength range to traverse more than one thin lens. Silicon is rendered even more unsuitable for many mid-infrared applications, as for purposes of optical stability, thick lenses are beneficial. The term "optical stability" in the context of the current specification particularly refers to a property or characteristic resulting in greater alignment and manufacturing tolerances.

For this reason, mid-infrared optics and particularly mid-infrared lenses are made of the aforementioned materials such as Ge, ZnSe, GaAs, InP, chalcogenide glasses and others. For these materials to be processed and shaped into optics, cast molding processes for chalcogenide glasses or diamond turning for Ge, ZnSe, GaAs, or InP are employed.

Lenses of this type are known from the prior art documents EP 2 256 812 A1 and US 2022/281194 A1.

While molding is a fairly cost-efficient process, diamond turning is not. However, lenses with sizes lower than approximately 2 mm thickness and/or diameter cannot be manufactured well with either technique.

On the other hand, for micro-optics, the shape of the micro-optics is typically etched into a surface of a wafer with a photolithographic process known in the art as 'proportional deep reactive ion etching' (proportional DRIE etching) or only reactive-ion etching (RIE). Well-known variants of RIE are well-known in the art, such as Photoresist Reflow Lithography or Nano-imprint Lithography. This process results in very accurate shapes even at very small dimensions. The second great advantage of DRIE etching is its scalability: large numbers, i.e. thousands of lenses can be produced on a single wafer, reducing the cost per lens dramatically.

Unfortunately, proportional DRIE etching is only well-developed for wafers in the silicon or silicon dioxide material systems due to the general advantage of the wealth of experience that exists in the silicon industry. In general, out of these two, particularly only silicon is considered here further, as silicon dioxide is highly opaque in the mid-infrared and therefore comparably unsuitable for refractive optics.

Thus, the technical dilemma is that while the most accurate and most cost-efficient production method for micro-optics is only applicable to silicon, silicon is not transparent enough in the range with wavelengths between 8 µm and 11 µm. This problem leads to the fact that to this day no cost-efficient micro-optics exist for the mid-infrared wavelength range.

The object of the present invention is therefore, to resolve this technical dilemma.

The object is achieved by the refractive optical element having the features of claim 1, as well as the method of manufacture for one or more of such refractive optical elements.

Advantageous embodiments are described in the dependent claims.

According to a first aspect of the invention, a refractive optical element, particularly a micro-lens or a retro-reflector for a laser, has an optical axis, and a first lens surface configured to provide an optical power to the refractive optical element. The refractive optical element further comprises:
- a substrate having a first, particularly a first planar side and a second, particularly a second planar side opposite the first side of the substrate,
- a first layer arranged on the first side of the substrate, wherein the first layer comprises the first lens surface of the refractive optical element,
wherein in a wavelength range from 6 µm to 15 µm, particularly from 8 µm to 10 µm, the substrate has a lower absorption coefficient than the first layer.

That is, in said wavelength range, the absorption coefficient of the substrate is lower than the absorption coefficient of the first layer.

The terms "in the wavelength range" or "in a wavelength range" are particularly to be understood and interpreted as "throughout the wavelength range" in the current specification. This wavelength range ranging from 6 µm to 15 µm, particularly from 8 µm to 10 µm, is also referred to as "the mid-infrared wavelength range" and vice versa in the current specification. It is clear that the wavelength range refers to the wavelength range associated to electro-magnetic waves in vacuum The first layer particularly covers the first side of the substrate with the first lens surface and may extend with a varying thickness on the first side of the substrate along the optical axis.

The first layer is therefore shaped such that it forms the first lens surface. Particularly, the first layer therefore comprises the first lens surface as a portion of the first side of the first layer.

This allows for using a material for the substrate that is more transparent in the mid infrared wavelength range than the material used for the first layer. That is, the material of the substrate has a lower absorption coefficient than the material of the first layer in the mid infrared wavelength range.

The goal of the invention to provide a cost-efficient refractive optical element for mid-infrared applications is therefore achievable by using a material for the first layer that can be processed by well-established etching processes such as proportional DRIE for generating the first lens surface and thus generating the optical power of the refractive optical element, particularly wherein the substrate does in essence not contribute to the optical power of the refractive optical element, but only to its (optical) thickness and its mechanical stability. A higher optical thickness is often desirable, as it allows a more advantageous trade-off between the curvature of the first lens surface and the numerical aperture of the refractive optical element.

Particularly and advantageously, the first layer is a first etched layer, as a surface of the first layer, particularly the first lens surface, has been shaped by means of an etching process. Etching processes, such as RIE or proportional DRIE, for manufacturing micro-optics have been well-established particularly for silicon-based materials.

While the transmissive properties of the first layer may not be perfectly suited for the mid infrared wavelength range, absorption of the refractive optical element is nonetheless comparably low in the mid infrared wavelength range, as the first layer may be significantly thinner than a substrate thickness, such that a contribution to the absorption of the refractive optical element, which may be measured over the whole open aperture of the refractive optical element, is low, particularly less than 50% of the absorption of the refractive optical element, more particularly less than 30% of the absorption of the refractive optical element, compared with a homogeneous refractive optical element of the same optical thickness made from the first layer material only. The substrate thickness may be measured along the optical axis of the refractive optical element.

A thickness of the first layer may be measured along the optical axis of the refractive optical element. Particularly, the thickness of the first layer may be the biggest extend of the first layer along the optical axis, particularly within the open aperture of the optical element. In this context, a first layer that is thinner than the substrate has a lower thickness than the substrate.

The first lens surface is particularly a surface of the refractive optical element, that has a curvature or a plurality of surface portions that are inclined with respect to the optical axis of the refractive optical element.

The first lens surface, particularly the first side of the first layer may be covered with an anti-reflection coating on the side facing away from the substrate.

The first side of the substrate interconnects with the first layer, wherein the first side of the substrate may be planar, i.e. the first side extends in a flat, even fashion along for example two axes, e.g. an x-axis and a y-axis, of a three-dimensional Cartesian coordinate system, wherein the optical axis would extend along a z-axis of the Cartesian coordinate system.

The smooth first side allows for reducing deteriorations of optical wavefronts passing through the refractive optical element along the optical axis. Such deteriorations may comprise changing a curvature and/or altering a phase of the wavefront.

Particularly, the optical power of the refractive optical element is provided only by the first lens surface. Particularly, the substrate does not provide any optical power to the refractive optical element.

Similarly, the substrate's second side may be smooth in the same way as the first side of the substrate, i.e. flat, planar and/or even, wherein the second side of the substrate may form a second surface of the refractive optical element, particularly in case there is no second layer arranged on said second side of the substrate.

The substrate therefore allows for providing a thick optical element, such as a thick lens, by having a thickness that is bigger than the thickness of the first layer.

According to another embodiment of the invention, the refractive optical element comprises a second layer arranged on the second side of the substrate along the optical axis wherein the second layer comprises a second lens surface of the refractive optical element, wherein in the wavelength range, the absorption coefficient of the substrate is lower than the absorption coefficient of the second layer.

The second lens surface may be arranged opposite the first lens surface. It is noted that the first and the second lens surface may differ in shape and/or geometry.

The second layer may be formed, generated and processed similar or identical to the first layer but on the second side of the substrate.

Therefore, the second layer particularly covers the second side of the substrate with the second lens surface and may extend with a varying thickness on the second side of the substrate along the optical axis.

The second layer may therefore be shaped such that it forms the second lens surface. Particularly, the second layer comprises the second lens surface as a portion of the second side of the second layer.

This allows for using a material for the substrate that is more transparent in the wavelength range than the material used for the second layer. That is, the material of the substrate has a lower absorption coefficient than the material of the second layer in the wavelength range.

The goal of the invention to provide a cost-efficient refractive optical element for mid-infrared applications is therefore achievable by using a material for the second layer that can be processed by well-established etching processes such as proportional RIE or DRIE for generating the second lens surface and thus generating the optical power of the refractive optical element, particularly wherein the substrate does in essence not contribute to the optical power of the refractive optical element, but only to its (optical) thickness and its mechanical stability.

Particularly and advantageously, the second layer is a second etched layer, as a surface of the second layer, particularly the second lens surface, has been shaped by means of an etching process. Etching processes, such as RIE or proportional DRIE, for manufacturing micro-optics have been well-established particularly for silicon-based materials.

While the transmissive properties of the second layer may not be perfectly suited for the wavelength range, absorption of the refractive optical element is nonetheless comparably low, as the second layer may be significantly thinner than the substrate thickness, such that a contribution to the absorption of the refractive optical element, is low, particularly less than 50% of the absorption of the refractive optical element, more particularly less than 30% of the absorption of the refractive optical element, compared with a homogeneous refractive optical element of the same optical thickness made from the first layer material only.

A thickness of the second layer may be measured along the optical axis of the refractive optical element. Particularly, the thickness of the second layer may be the biggest extend of the second layer along the optical axis, particularly within the open aperture of the optical element. In this context, a second layer that is thinner than the substrate has a lower thickness than the substrate.

The second lens surface is particularly a surface of the refractive optical element, that has a curvature or a plurality of surface portions that are inclined with respect to the optical axis of the refractive optical element.

The second lens surface, particularly the second side of the second layer, may be covered with an anti-reflection coating on the side facing away from the substrate.

The second side of the substrate interconnects with the second layer, wherein the second side of the substrate may be planar, i.e. the second side extends in a flat, even fashion along for example two axes, e.g. an x-axis and a y-axis, of the three-dimensional Cartesian coordinate system, wherein the optical axis would extend along a z-axis of the Cartesian coordinate system.

The smooth second side allows for reducing deteriorations of optical wavefronts passing through the refractive optical element along the optical axis. Such deteriorations may comprise changing a curvature and/or altering a phase of the wavefront.

Particularly, the optical power of the refractive optical element is provided only by the first and the second lens surface. Particularly, the substrate does not provide any optical power to the refractive optical element.

The embodiment having a second layer allows for manufacturing for example double concave or double convex lenses for mid-infrared applications.

According to the invention, the absorption coefficient of the substrate in said wavelength range is at least twice smaller than the absorption coefficient of the first layer, and/or wherein in case the refractive optical element comprises the second layer, the absorption coefficient of the substrate in the wavelength range is at least twice smaller than the absorption coefficient of the second layer.

This embodiment particularly limits the invention against devices having different absorption coefficients but not in the order of magnitude as provided here and particularly not for the same reasons.

This embodiment allows for using greatly different materials for manufacturing the refractive optical device, by using materials for the first and/or the second layer that do not provide as good as transmission properties as the substrate, but allow for processing with etching processes, such as RIE or DRIE.

According to another embodiment of the invention, the absorption coefficient of the substrate in the wavelength range is smaller than 2 cm⁻¹, particularly smaller than 1 cm⁻¹.

According to another embodiment of the invention, wherein the absorption coefficient of the first layer in the wavelength range is greater than 0.1 cm⁻¹, particularly greater than 0.5 cm⁻¹, and/or wherein in case the refractive optical element comprises the second layer, the absorption coefficient of the second layer in the wavelength range is greater than 0.1 cm⁻¹, particularly greater than 0.5 cm⁻¹.

According to another embodiment of the invention, the refractive optical element comprises a first interface formed between the first layer and the first side of the substrate.

The first interface may be devoid of a compound other than compounds present in the first layer and the substrate.

Alternatively, or in addition, the first interface is devoid of an adhesive and/or an anti-reflection coating.

According to another embodiment of the invention, in case the refractive optical element comprises the second layer, the refractive optical element comprises a second interface formed between the second layer and the second side of the substrate. The second interface may be devoid of a compound other than compounds present in the second layer and the substrate.

Alternatively, or in addition, the second interface is devoid of an adhesive and/or an anti-reflection coating.

To reduce partial reflections at the first and or the second interface, typically a coating for optical impedance-matching, e.g. an anti-reflection coating is arranged at the interface before the first and/or the second layer are connected with the substrate, e.g. by means of a bonding process. This however, may technically not be feasible, as such coating might interfere with wafer bonding techniques that can be used to bond the first and/or the second layer to the substrate.

Therefore, the refractive optical element according to the invention has no such coatings arranged between the substrate and the first and/or the second layer. According to another embodiment of the invention, the substrate and the first layer are directly connected with each other, particularly bonded, particularly at the first interface, and/or wherein in case the refractive optical element comprises the second layer, the substrate and the second layer are directly connected with each other, particularly bonded, particularly at the second interface.

The direct connection allows for using a well-established bonding technique to be used for producing the refractive optical element and thus allows for cost-efficient manufacturing of the refractive optical element.

According to the invention, a refractive index of the first layer and a refractive index of the substrate differ not more than 0.6, particularly not more than 0.42, more particularly not more than 0.2, and/or wherein in case the refractive optical element comprises the second layer, a refractive index of the second layer and a refractive index of the substrate differ not more than 0.6, particularly not more than 0.4, more particularly not more than 0.2.

This embodiment allows to greatly reduce partial reflections at the first and/or at the second interface of the refractive optical element, as refractive index mismatches between the first layer and the substrate respectively the second layer and the substrate are reduced, and therefore, partial reflections are reduced. This embodiment therefore further advantageously combines with the first and/or the second interface being devoid of any coating or adhesive layer by using materials for the first and/or the second layer and the substrate that have refractive indices that are sufficiently close to each other.

According to another embodiment of the invention, the substrate comprises or consists of one of the following: Gallium arsenide (CAS-Nr: 1303-00-0), Indium phosphide (CAS-Nr: 22398-80-7) or Germanium.

It is understood that the interpretation of the term "consists" in the context of this embodiment includes any impurities that are common in optical grade materials for the refractive optical element.

According to another embodiment of the invention, the first layer consists of silicon, silicon dioxide (CAS-Nr: 7631-86-9), or a mixture thereof, and/or wherein in case the refractive optical element comprises the second layer, the second layer consists of silicon, silicon dioxide, or a mixture thereof.

The group of materials consisting of silicon, silicon dioxide and/or a mixture thereof, is referred to in the following as "silicon-based" or "silicon-based materials".

The use of silicon-based material for the first and/or the second layer, allows for the use of well-established etching techniques, such as RIE or proportional DRIE, in order to generate the first and/or the second lens surface. While silicon-based materials do not provide ideal transmission properties in the mid-infrared wavelength range, the manufacturing methods available for silicon-based materials are well-developed and therefore allow for cost-efficient manufacturing. This advantage is used by the invention and this embodiment by combining the silicon-based first and/or the silicon-based second layer with the substrate, that consists of a different material that may not be processed with the well-established manufacturing methods for silicon, but which has better transmission properties. The combination yields a refractive optical element having a significantly lower absorption than a corresponding refractive optical element consisting only of silicon-based materials.

Particularly, a combination of the first layer consisting of the silicon-based material with the substrate consisting of Gallium arsenide, Indium phosphide or Germanium yields an optical refractive element which optical properties, are particularly well-adjusted for each other for use in the wavelength range.

For example, the difference in the refractive indices between the silicon-based first layer and the substrate consisting of Gallium arsenide, Indium phosphide or Germanium, may be as low as 0.2 over the wavelength range, such that partial reflections at the first interface are greatly reduced.

The same reasoning applies for the combination of the silicon-based second layer with the substrate.

Particularly, the refractive index of silicon n_{Si} is in the range of 3.4170 to 3.4142 in a wavelength range from 6.5 µm to 14 µm. A material providing very good refractive index matching to silicon-based materials is Gallium arsenide having a refractive index n_{GaAs} of 3.2900 to 3.2470 in the same wavelength range, such that low partial internal reflections of only 0.036% to 0.065% are to be expected at the first and/or the second interface.

A difference of refractive indices (Δn) between these two materials is never greater than 0.2, which yields particularly low partial reflections at the first and/or the second interface.

Similarly, Indium phosphide exhibits a refractive index n_{InP} of 3.0823 to 3.0000 (with a Δn to silicon-based materials always smaller 0.42) and Germanium exhibits a refractive index of 4.0081 to 4.0004 (with a Δn to silicon-based materials always smaller than 0.6) in the wavelength range. These results in partial internal reflections of 0.27% to 0.42% and 0.63% to 0.62%, respectively, which is well acceptable for most applications.

According to another embodiment of the invention, a thickness of the substrate along the optical axis of the refractive optical element is at least 1 to 10 times bigger than a thickness of the first layer and/or wherein in case the refractive optical element comprises the second layer, the thickness of the substrate along the optical axis of the refractive optical element is at least one to ten times bigger than a thickness of the second layer.

As elaborated previously, the substrate's thickness may be measured along the optical axis of the refractive optical element in the open aperture of the refractive optical element. The thickness of the substrate may be represented by an average value of thicknesses of the substrate measured across the open aperture, a highest or a lowest value.

The thickness of the first layer may be measured along the optical axis of the refractive optical element as well. Particularly, the thickness of the first layer may be the biggest extend of the first layer along the optical axis, for example measured from the first interface of the substrate and the first layer to a point of the first layer that has the biggest distance along the optical axis to said first interface.

The thickness of the first layer may be represented by an average value of thicknesses of the first layer measured across the open aperture or a portion thereof, a highest or a lowest value.

The lower the thickness of the first layer is in comparison to the substrate thickness, the better the transmission properties of the refractive optical element. However, due to processing reasons the first layer may require to have a minimum thickness in order to be processed for example by means of an etching method, such as RIE or DRIE. Similarly, the thickness of the second layer may be measured along the optical axis of the refractive optical element as well. Particularly, the thickness of the second layer may be the biggest extend of the second layer along the optical axis, for example measured from the second interface of the substrate and the second layer to a point of the second layer that has the biggest distance along the optical axis to said second interface.

The thickness of the second layer may be represented by an average value of thicknesses of the first layer measured across the open aperture or a portion thereof, a highest or a lowest value.

The lower the thickness of the second layer is in comparison to the substrate thickness, the better the transmission properties of the refractive optical element. However, due to processing reasons the second layer may require to have a minimum thickness in order to be processed for example by means of an etching method, such as RIE or DRIE.

According to another embodiment of the invention, the thickness of the substrate along the optical axis of the refractive optical element is in the range of 0.1 mm to 5 mm, particularly in the range of 0.1 mm to 3 mm.

This embodiment allows for the provision of thick refractive optical elements with good transmission properties.

According to another embodiment of the invention, a diameter or a side length of the substrate is in the range of 0.3 mm to 5 mm, particularly in the range of 0.3 mm to 3 mm.

This embodiment illustrates the capability of the invention to manufacture refractive optical elements of particularly small dimensions. Conventional refractive optical elements for the mid infra-red wavelength range, e.g. consisting only of one homogeneous material (including elemental, compound or alloyed), such as Gallium arsenide, Indium phosphide or Germanium cannot be manufactured in high numbers and cost efficient in these dimensions, as no suitable manufacturing process is available.

Alternatively, conventional refractive optical element made from silicon-based materials only are hardly suitable for mid-infra-red wavelength range applications, particularly in the vicinity of 9 µm, due to the reduced transmission properties of silicon in this wavelength range.

According to another embodiment of the invention, the thickness of the first layer of the refractive optical element is in the range from 0.05 mm to 0.3 mm, and/or wherein in case the refractive optical element comprises the second layer, wherein the thickness of the second layer along the optical axis of the refractive optical element is in the range from 0.05 mm to 0.3 mm.

Particularly, in combination with previous embodiments, this embodiment allows for very small mid-infra-red wavelength refractive optical elements using silicon-based manufacturing methods.

According to another embodiment of the invention, the first lens surface is either a convex or a concave surface, particularly wherein the first lens surface is completely formed, particularly comprised, by the first layer, and/or wherein in case the refractive optical element comprises the second layer, wherein the second lens surface is either a convex or a concave surface, particularly wherein the second lens surface is completely formed, particularly comprised, by the second layer.

Particularly, the first and/or the second lens surface has an aspherical shape, so that an aspherical refractive optical element with reduced spherical aberrations is provided. According to another embodiment of the invention, the first lens surface comprises one, two or three collapses of the first lens surface configured to form a Fresnel-lens surface having one, two or three collapses, and/or wherein in case the refractive optical element comprises the second layer, wherein the second lens surface comprises one, two or three collapses of the second lens surface configured to form a Fresnel-lens surface having one, two or three collapses.

A Fresnel-lens allows for a flatter, i.e. less thick first layer by collapsing the lens surface concentrically to the optical axis of the refractive optical element. This yields the characteristic rough, concentric friction ridge-like lens surface. Each such ridge or sawtooth-like portion (when viewed in a cross-sectional view) of such a Fresnel-lens surface is referred to as a collapse of the first lens surface. As one focus of the invention is to provide micro-optics for mid-infrared applications, typically one, two or three collapses are sufficient, to reduce the thickness of the first layer. This embodiment therefore, allows for a particularly thin first layer, while achieving a defined design optical power of the refractive optical element. This embodiment is particularly advantageous, in case the refractive optical element is configured as a retro-reflector for example in an External-Cavity Quantum-Cascade Laser. Here, the imaging characteristics are not as important as providing a stable, i.e. thick, and a low-absorbing retro-reflector in order to stably maintain a gain of the amplified light. According to another embodiment of the invention, the refractive optical element is a lens. In this embodiment, the refractive optical element does not comprise any reflection-coated or highly reflective surfaces;

The lens may comprise a functional coating or functional layer on the first lens surface. Further, in case the lens is devoid of the second layer, the second side of the substrate might be coated with a functional coating or a functional layer.

In case the lens is comprises a second layer, the second lens surface might be coated with a functional coating or a functional layer.

The functional coating or functional layer may comprise an anti-reflection layer or an anti-reflection coating. In addition, or alternatively, the functional coating or functional layer may comprise a protective layer that is configured to protect the first and/or the second lens surface or the second side of the substrate from dust, scratches or other environmental influences that may lead to a deterioration of the first and/or the second lens surface or the second side of the substrate.

According to an another embodiment, the first and/or the second lens surface or the second side of the substrate are devoid of a reflection coating (highly reflective or anti-reflective), particularly in case the refractive optical element comprises the second layer, wherein the first and/or the second lens surface are the only surfaces of the lens providing an optical power to the lens, and particularly wherein in case the refractive optical element does not comprise the second layer, only the first lens surface provides an optical power to the lens.

According to another embodiment of the invention, the refractive optical element is a retro-reflector, wherein the second side of the substrate comprises a reflective layer forming a reflective surface.

The term "reflective surface" particularly refers to a reflectivity greater or equal to 50%, particularly greater than 80% in the wavelength range.

More particularly, the reflective surface is smooth, such that a specular reflection regime is achieved.

The first lens surface of the retro-reflector particularly has convex optical properties, i.e. the first lens surface may be formed as a convex surface or the lens surface is structured such that convex optical properties are achieved, e.g. by forming corresponding Fresnel collapses.

According to another embodiment of the invention, the first and/or the second lens surface or the first lens surface and/or the second surface of the substrate comprise(s) an anti-reflection or a reflective layer, such as a reflection coating.

The reflective layer may comprise silver, gold, or aluminium.

According to a further aspect of the invention, an array of refractive optical elements is disclosed, wherein the array comprises a plurality of the refractive optical elements according to the first aspect of the invention.

The substrates of the plurality of refractive optical elements of the array are formed as a single, particularly a continuous and integrally formed substrate piece.

The first layers of the plurality of refractive optical elements of the array are formed as a single, particularly a continuous and integrally formed first layer piece.

In case the refractive optical elements comprise the second layers, the second layers of the plurality of refractive optical elements of the array are formed as a single, particularly a continuous and integrally formed second layer piece.

This aspect discloses an interconnected array of refractive optical elements having the same advantages as laid out in previous paragraphs and furthermore, combines the power of parallel production of a plurality of refractive optical elements for cost-efficient manufacturing. The refractive optical elements are all formed on the same substrate piece, the same first layer piece and/or the same second layer piece. Additional functional layers or reflection layers may extend continuously and integrally formed over the complete array.

The plurality of refractive optical elements may comprise more than 100, particularly more than 1,000, more particularly more than 10,000 refractive optical elements. The array is an embodiment of the capability of mass-producing the refractive optical element by conventional manufacturing methods, particularly etching methods specifically developed for silicon-based materials. The refractive optical elements may form single micro-optics or a combined faceted refractive optical element. In the latter case, particularly the first and/or the second lens surfaces may adopt different shapes for different refractive elements in the array.

According to another embodiment of the invention, the first layer piece is a first wafer of which a surface has been processed to form the first lens surfaces of the plurality of refractive optical elements, and wherein the substrate piece is a second wafer, and/or wherein in case the refractive optical elements comprise the second layers, the second layer piece is a third wafer of which a surface has been processed to form the second lens surfaces of the plurality of refractive optical elements.

This embodiment illustrates and harvests the power of cost-efficient production by using conventional wafers, particularly wherein a surface of the first wafer is processed for example by proportional DRIE, in order to form the first lens surfaces.

This allows particularly cost-efficient production.

Similarly, in case the array comprises a second layer piece, particularly a surface of the third wafer is processed for example by proportional DRIE, in order to form the second lens surfaces.

According to another embodiment of the invention, the first lens surface is an etched surface of the first layer piece.

According to another embodiment of the invention, the second lens surface is an etched surface of the second layer piece.

According to a third aspect of the invention, a method of manufacturing for one or more of the refractive optical elements according to the invention or the array with a plurality of the refractive optical elements according to the invention is disclosed. The method comprises the steps of:
- Providing a first wafer consisting of the material of the first layer of the refractive optical element, the first wafer having a first side and a second side opposite the first side,
- Providing a second wafer consisting of the material of the substrate of the refractive optical element, the second wafer having a first and a second side;
- Bonding the first wafer with its second side to the first side of the second wafer, such that the first and the second wafer are fixedly attached to each other, particularly forming the first interface of the refractive optical element;
- Applying a reactive-ion etching (RIE) method, particularly a deep reactive-ion etching method (DRIE) to the first side of the first wafer, such that a plurality of first lens surfaces is etched from the first side of the first wafer so as to form the plurality of refractive elements of the array.

Providing a first wafer, a second wafer and third wafer for example comprises the notion of holding ready and/or acquiring.

The second side of the first wafer may be smooth and flat, planar and/or even. Similarly, the first side, particularly a surface, of the second wafer may be smooth and flat, planar and/or even.

It is noted that the order of the steps, particularly with regard to the bonding step and the application of an etching method, e.g. RIE or DRIE (also referred to as etching step on the context of the current specification), may be interchanged. For example, the first wafer may be processed by the RIE method before or simultaneous to bonding the first wafer with the second wafer.

Prior to bonding, cleaning, polishing and/or activating the second side of the first wafer and the first side of the second wafer can be executed. These steps may also be comprised in the bonding step.

Activation may be facilitated by chemicals and/or plasma treatment.

The method allows for cost-efficient manufacturing of micro-optics, such as micro-lenses or micro-retro-reflectors for the mid-infrared wavelength range, as the second wafer may consist of a material that has a lower absorption coefficient than the material of which the first wafer consists of.

Particularly, the first wafer may consist of a silicon-based material as defined in a previous paragraph. In addition, the second wafer may consist of a material that has a lower absorption coefficient than silicon-based material in the mid-infrared wavelength range, such as Gallium arsenide, Indium phosphide or Germanium.

The method advantageously allows to cost-efficiently manufacture in large numbers high quality micro-optical refractive optical elements for mid-infrared wavelength range applications, by using the different wafer materials, and processing techniques well-established by the silicon-processing industry.

It is noted that the definitions, embodiments and features disclosed for the refractive optical device and/or the array are applicable to the method and vice versa. For example, materials, a geometry, refractive indices and/or dimensions of the refractive optical element or its components, particularly with regard to its thickness of the layers or a lateral extent, may be incorporated as features in the embodiments disclosed for the method.

Similarly, the first layer, particularly the first lens surface may be a RIE or DRIE processed or formed surface.

According to another embodiment of the invention, the method further comprises the steps of:
- Providing, e.g. holding ready and/or acquiring, a third wafer consisting of the material of the second layer of the refractive optical element, the third wafer having a first side and a second side opposite the first side,
- Bonding the third wafer with its first side to the second side of the second wafer, such that the third and the second wafer are fixedly attached to each other, particularly forming the second interface of the refractive optical element;
- Applying the reactive-ion etching (RIE) method, particularly the DRIE method, to the second surface of the third wafer, such that a plurality of second lens surfaces is etched from the second side of the third wafer so as to form the plurality of refractive elements of the array, particularly wherein the first and the second lens surfaces coincide along the optical axes of the refractive optical elements.

The first side of the third wafer may be smooth and flat, planar and/or even, such that bonding the third waver with the second wafer is readily achievable.

Also. in this embodiment, the bonding step may precede or may come after the etching step. Further, the order in which the first wafer, the second wafer and the third wafer a bonded and etched is freely interchangeable. The claims are not intended to set or specify any particular order but to solely list the steps necessary for manufacturing the refractive optical element or the array.

Prior to bonding, cleaning, polishing and/or activating the first side of the third wafer and the second side of the second wafer can be executed. These steps may also be comprised in the bonding step.

This embodiment allows for manufacturing micro-lenses that have two lens surfaces providing optical power to the lens, such as two curved surfaces or two Fresnel surfaces or one curved and one Fresnel surface for mid-infrared wavelength applications.

According to another embodiment of the invention, in case an array is manufactured, after executing the RIE-method to the first wafer and/or the third wafer, the array is cut into single refractive optical elements. This step is also referred to as dicing in the art. According to another embodiment of the invention, the bonding step between the first wafer and the second wafer and/or between the third wafer and the second wafer is selected from one of the following: direct bonding, surface activated bonding, or plasma-activated bonding.

According to another embodiment of the invention, before cutting the array, the first lens surfaces are coated with a functional layer, such as an anti-reflection or a protective coating, and/or wherein in case the array is devoid of the third wafer, the second side of the second wafer is coated w a functional layer such as an anti-reflection, or a reflective layer, wherein in case the array comprises a third wafer, the second side of the third wafer may be coated with a functional layer, such as an anti-reflection.

According to a fourth aspect of the invention, an optical device, such as a laser, particularly an external cavity quantum cascade laser, comprising one or more refractive optical elements according to the invention is disclosed.

A first refractive optical element may be a retro-reflector. A second refractive optical element may be a lens.

According to another embodiment of the invention, the optical device is an external cavity quantum cascade laser and the refractive optical element is formed as a retro-reflector, particularly arranged in a cavity of the quantum cascade laser.

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
- Fig. 1: shows a schematic cross-section through a refractive optical element;
- Fig. 2: shows a refractive optical element having second layer;
- Fig. 3: shows a schematic view of a refractive optical element having a Fresnel-lens first lens surface
- Fig. 4: shows a schematic view of an array comprising a plurality of refractive optical elements;

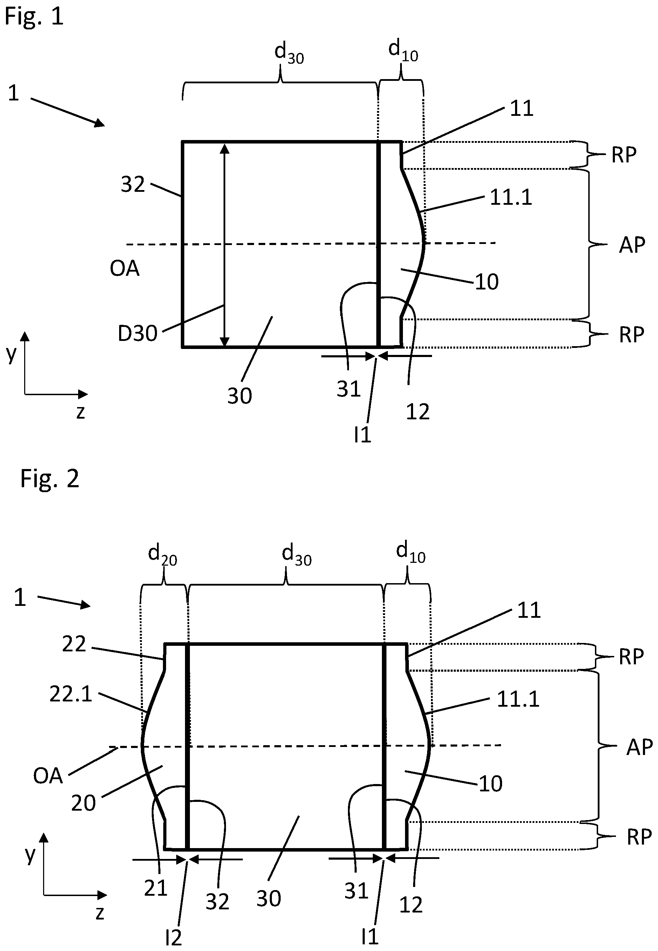

In Fig. 1 a schematic cross-section of a refractive optical element 1 according to the invention is shown. The cross-section extends along a lateral axis, e.g. an x- or y-direction of a Cartesian coordinate system, and a direction along an optical axis, e.g. a z-direction of the Cartesian coordinate system.

The refractive optical element 1 consists of a substrate 30 and a first layer 10. The first layer 10 is arranged on the substrate 30 along the optical axis OA.

The substrate 30 has two opposing sides 31, 32 that are oriented parallel to each other and orthogonal to the optical axis OA. The substrate may be formed as a cylinder, cuboid or a cube comprising the first and the second side 31, 32. The substrate may have a diameter D30 or a side length D30 of the cuboid in the range of 0.3 mm to 5 mm. Between the substrate 30, particularly between the first side 31 of the substrate 30 and the first layer 10, particularly a second side 12 of the first layer 10, a first interface I1 is formed. The first interface I1 is devoid of any functional coating or an adhesive layer. The interface I1 and thus the first side 31 of the substrate 30 as well as the second side 12 of the first layer 10 are smooth and even and extend planar along the lateral direction, i.e. along the x- and a y-direction of the Cartesian coordinate system. A diameter or side length of the first layer 10 (and the second layer 20) may be the same as the one D30 of the substrate 30.

This way, the substrate 30 and the first layer 10 may be bonded well together by means of a bonding process.

The substrate 30 has a thickness d30 along the optical axis OA that is several times greater than a thickness d10 of the first layer 10 along the optical axis OA. The thickness d10 of the first layer 10 may be measured from the first interface I1 to a greatest extension of the first layer 10 away from the interface I1 along the optical axis OA.

The first layer 10 consists of a silicon-based material, wherein such a material particularly is selected from the group consisting of: silicon or silicon-dioxide or mixture thereof.

Silicon comes in various qualities. For example, the silicon for the first layer 10 may be obtained by a Czochralski pulling technique and contains some oxygen which causes an increased absorption coefficient at 9 µm.

In order to reduce this absorption band, a float-zone technique may be applied. Further, optical-grade silicon may be doped for improved transmission above 10 µm. The dopant may be Boron or Phosphorus, but also nitrogen may be added. Therefore, the term 'silicon-based' in the context of the current specification is to be interpreted in the light of the various degrees of purity and particularly including a voluntary doping of the silicon in order to obtain and tune the absorption bands of silicon in the wavelength range, i.e. the term 'silicon-based' may explicitly comprise silicon that is obtained using the Czochralski technique or the float-zone technique, including the voluntary addition of for example nitrogen or other useful dopants.

The substrate 30 may consist of Gallium arsenide, Indium phosphide or Germanium. These materials provide excellent transmission properties in the mid-infrared wavelength range and have a refractive index close to silicon, such that partial reflections at the first interface I1 due to the refractive index mismatch are reduced.

While for silicon various etching techniques have been put to work for large scale manufacturing, for Gallium arsenide, Indium phosphide or Germanium these techniques are not well-established and therefore a first layer 10 consisting of one of these materials would not have accesses to the common etching techniques, increasing the costs of manufacturing significantly, as for example techniques like cast molding or diamond turning are much more expensive, and not suitable for producing a plurality of refractive optical elements in parallel. Particularly cast molding is not configured to manufacture micro-optical elements.

The inventive refractive optical element 1, allows for using the silicon processing techniques for manufacturing refractive optical elements 1 configured for mid-infrared wavelength range applications, while maintaining a high degree of transmission for these elements.

The refractive optical element 1 of Fig. 1 is a micro-collimating lens for mid-infrared wavelength applications. For this purpose, the first layer 10 has a convex-shaped first surface portion 11.1 comprised by the first side 11 opposite the second side 12 of the first layer 10, that is, the first side 11 comprises the first lens surface 11.1.

Further the first side 11 of the first layer 10, comprises a portion that defines an open aperture AP of the refractive optical element 1. The open aperture AP particularly is the portion of the first layer 10 which comprises the lens surface 11.1. In addition to the open aperture AP, the first layer 10 for example comprises a rim portion RP on its first side 11 that is not comprised by the lens surface 11.1 and that is not part of the open aperture AP.

The first side 11 of the first layer 10 may be processed by a reactive-ion etching method, such a proportional deep reactive ion etching (DRIE).

The substrate 30 has a second side 32 opposite the first side 31 of the substrate 30 that faces away from the first interface I1. The second side 32 of the substrate 30 is planar. The second side 32 of the substrate 30 in this case forms the second lens surface of the lens. Therefore, the lens is formed as a plano-convex lens. The lens is shaped as a thick lens and therefore provides an increased robustness and improved tolerances for aligning the lens in micro-optical applications.

The first lens surface 11.1 may be shaped aspherical, such that an aspheric lens is obtained. Aspheric lenses are particularly well-suited for collimating monochromatic light, such as monochromatic laser light, as spherical aberrations are greatly reduced. However, other lens surface shapes are possible.

The first lens 11.1 surface may be coated with a functional layer (not shown) to reduce partial reflections at the lens surface. Similarly, the second lens surface may be coated with a functional layer (not shown).

Fig. 2 schematically shows an embodiment of the invention, in which the refractive optical element 1 in addition to the first layer 10 and the substrate 30 comprises a second layer 20 that is formed from a silicon-based material. The second layer 20 has a first side 21 that is connected by bonding with the second side 32 of the substrate 30 forming a second interface I2. The second layer 20 comprises a second side 22 that comprises the second lens surface 22.1. The second lens surface 22.1 in the example of Fig. 2 is convex like the first lens surface 11.1, such that a thick double-convex micro-lens with high mid-infrared wavelength range transmission is formed. The second layer 20 may be processed as well with a DRIE method.

Also, here, like the first layer 10, the second layer 20 is several times thinner than the substrate 30, i.e. a thickness d20 measured analogously to the thickness d10 of the first layer 10, of the second layer 20 is several times smaller than the thickness d30 of the substrate 30. Particularly, the thickness d10, d20 of the first and/or the second layer 10, 20 may be five to ten times smaller than the thickness d30 of the substrate 30. For alternative embodiments in which for example the first layer 10 comprises a concave lens surface 11.1, the thickness d10 of the first layer 10 may be measured from the first interface I1 to the lowest point (on the optical axis) or the point(s) of the concave lens surface 11.1 on the open aperture AP of the lens that are farthest away from the first interface I1.

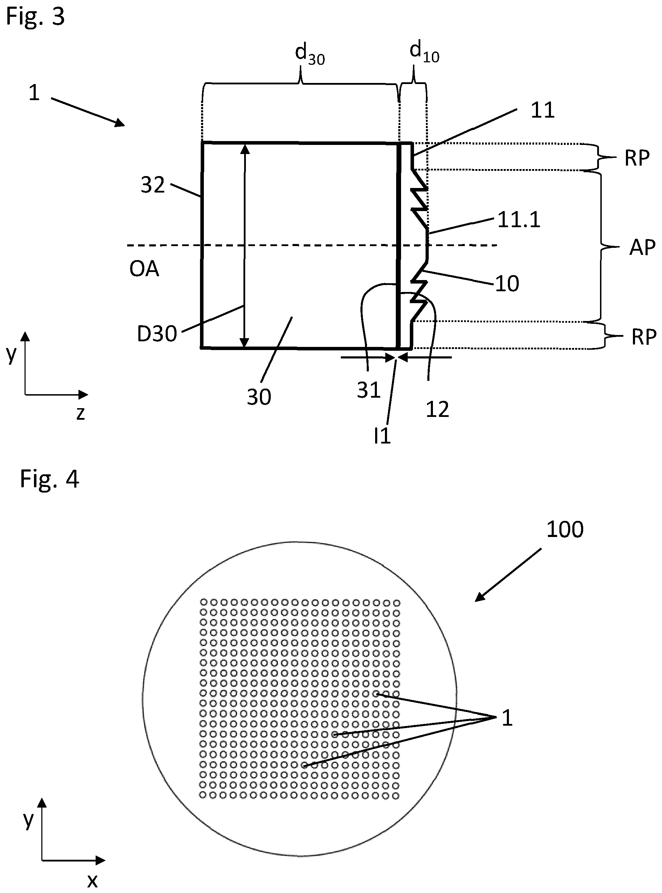

Fig. 3 shows an exemplary refractive optical element 1 having a first layer 10 that comprises a first lens surface 11.1 that forms a Fresnel-like surface, i.e. the first lens surface 11.1 comprises two collapses 11.2 (note that the collapses run concentrically around the optical axis OA and are therefore twice visible in the cross-section). This allows for using an even thinner first layer 10 therefore increasing transmission while maintaining an intended optical power of the refractive optical element 1.

Fig. 4 schematically depicts an array (along the x-y-direction) of refractive optical elements 1 according to the invention. Each circle indicates one refractive optical element 1, so that hundreds of refractive optical elements 1 are arranged in the array 100 along rows and columns.

The array 100 consists of a continuously formed substrate piece (not shown) that forms the plurality of substrates of the refractive optical elements 1. The substrate piece may be a wafer. Similarly, the array 100 comprises a continuously formed first layer piece that comprises the first layers of the refractive optical elements. The first layer piece may be a silicon wafer, which has been processed by an etching method to form the plurality of first lens surfaces (depicted as circles). The wafer of the substrate piece and the wafer of the first layer are bonded together, either before the first layer piece has been etched or afterwards.

Using conventional wafers allows for manufacturing a plurality of refractive optical element in large numbers.

The array 100 may be diced into single refractive optical elements 1.

## Claims

1. A refractive optical element (1), particularly a micro-lens or a retro-reflector for a laser, wherein the refractive optical element (1) has an optical axis (OA), and a first lens surface (11.1), wherein the refractive optical element (1) further comprises:
- a substrate (30) having a first side (31) and a second side (32) opposite the first side (31),
- a first layer (10) arranged on the first side (31) of the substrate (30), wherein the first layer (10) comprises the first lens surface (11.1) of the refractive optical element (1), wherein in a wavelength range from 6 µm to 15 µm, the substrate (30) has a lower absorption coefficient than the first layer (10), **characterized in that** the absorption coefficient of the substrate (30) in said wavelength range is at least twice smaller than the absorption coefficient of the first layer (10), and **in that** a refractive index of the first layer (10) and a refractive index of the substrate (30) differ not more than 0.6.

2. The refractive optical element (1) according to claim 1, wherein the refractive optical element (1) comprises a second layer (20) arranged on the second side (32) of the substrate (30), wherein the second layer (20) comprises a second lens surface (22) of the refractive optical element (1), wherein in the wavelength range, the substrate (30) has a lower absorption coefficient than the second layer (20).

3. The refractive optical element (1) according to claim 2, wherein the absorption coefficient of the substrate (30) in said wavelength range is at least twice smaller than the absorption coefficient of the second layer (20).

4. The refractive optical element (1) according to any of the preceding claims, wherein a refractive index of the first layer (10) and a refractive index of the substrate (30) differ not more than 0.42, more particularly not more than 0.2, and/or wherein in case the refractive optical element (1) comprises the second layer (20), a refractive index of the second layer (20) and a refractive index of the substrate (30) differ not more than 0.6, particularly not more than 0.42, more particularly not more than 0.2.

5. The refractive optical element (1) according to any of the preceding claims, wherein a chemical element the substrate (30) is made of is selected from the group consisting of one of the following: Gallium arsenide, Indium phosphide or Germanium.

6. The refractive optical element (1) according to any of the preceding claims, wherein a chemical compound the first layer (10) is made of is selected from the group consisting of silicon, silicon dioxide, or a mixture thereof, and/or wherein in case the refractive optical element (1) comprises the second layer (20), a chemical compound the second layer (20) is made of is selected from the group consisting of silicon, silicon dioxide, or a mixture thereof.

7. The refractive optical element (1) according to any of the preceding claims, wherein a thickness (d₁₀) of the first layer (10) is in the range from 0.05 mm to 0.3 mm, and/or wherein in case the refractive optical element (1) comprises the second layer (20), wherein a thickness (d₂₀) of the second layer (20) is in the range from 0.05 mm to 0.3 mm.

8. The refractive optical element (1) according to any of the preceding claims, wherein the first lens surface (11.1) is either a convex or a concave surface, particularly wherein the first lens surface (11.1) is comprised by the first layer (10), and/or wherein in case the refractive optical element (1) comprises the second layer (20), the second lens surface (22.1) is either a convex or a concave surface, particularly wherein the second lens surface (22.1) is comprised by the second layer (20).

9. The refractive optical element (1) according to any of the preceding claims, wherein the first lens surface (10) comprises one, two, or three collapses (11.2) of the first lens surface (11.1) configured to form a Fresnel-lens surface having one, two, or three collapses (11.2), and/or wherein in case the refractive optical element (1) comprises the second layer (20), wherein the second lens surface (20) comprises one, two, or three collapses of the second lens surface (22.1) configured to form a Fresnel-lens surface having one, two, or three collapses.

10. The refractive optical element (1) according to any of the preceding claims, wherein the refractive optical element (1) is a retro-reflector, wherein the second side (32) of the substrate (30) comprises a reflective layer forming a reflective surface.

11. An array (100) of refractive optical elements (1) comprising a plurality of the refractive optical elements (1) according to any of the preceding claims, wherein the substrates (30) of the plurality of refractive optical elements (1) of the array (100) are formed as a single substrate piece and wherein the first layers (10) of the plurality of refractive optical elements (1) of the array (100) are formed as a single first layer piece, and/or wherein in case the refractive optical elements (1) comprise the second layers (20), the second layers (20) of the plurality of refractive optical elements (1) of the array (100) are formed as a single second layer piece.

12. The array (100) according to claim 11, wherein the first layer piece is a first wafer which surface has been processed to form the first lens surfaces (11.1) of the plurality of refractive optical elements (1), and wherein the substrate piece is a second wafer, and/or wherein in case the refractive optical elements (1) comprise the second layers (20), the second layer piece is a third wafer which surface has been processed to form the second lens surfaces (22.1) of the plurality of refractive optical elements (1).

13. A method of manufacturing one or more of the refractive optical elements (1) according to any of claims 1 to 10 or the array (100) with a plurality of the refractive optical elements (1) according to any of the claims 11 to 12, the method comprising the steps of:
- Providing a first wafer consisting of the material of the first layer (10) of the refractive optical element (1), the first wafer having a first side and a second side opposite the first side,
- Providing a second wafer consisting of the material of the substrate of the refractive optical element (1), the second wafer having a first and a second side;
- Bonding the first wafer with its second side to the first side of the second wafer, such that the first and the second wafer are fixedly attached to each other, particularly forming the first interface (I1) of the refractive optical element (1);
- Applying a reactive-ion etching (RIE) method to the first side of the first wafer, such that a plurality of first lens surfaces (11) is etched from the first side of the first wafer so as to form the plurality of refractive elements of the array (100), wherein the bonding step may precede or may come after the reactive-ion etching.

14. The method according to claim 13, further comprising the steps of:
- Providing a third wafer consisting of the material of the second layer (20) of the refractive optical element (1), the third wafer having a first side and a second side opposite the first side,
- Bonding the third wafer with its first side to the second side of the second wafer, such that the third and the second wafer are fixedly attached to each other, particularly forming the second interface (I2) of the refractive optical element (1);
- Applying the reactive-ion etching (RIE) method to the second surface of the third wafer, such that a plurality of second lens surfaces (22.1) is etched from the second side of the third wafer so as to form the plurality of refractive elements (1) of the array, particularly wherein the first and the second lens surfaces (11.1, 22.1) coincide along the optical axes (OA) of the refractive optical elements (1), wherein the bonding step may precede or may come after the reactive-ion etching.

15. An external cavity quantum cascade laser comprising the refractive optical element (1) according to one of the claims 1 to 10, wherein the refractive optical element (1) is formed as a retro-reflector.

## Patentansprüche

1. Ein lichtbrechendes optisches Element (1), insbesondere eine Mikrolinse oder ein Retroreflektor für einen Laser, wobei das lichtbrechende optische Element (1) eine optische Achse (OA) und eine erste Linsenoberfläche (11.1) aufweist, wobei das lichtbrechende optische Element (1) ferner umfasst:
- ein Substrat (30) mit einer ersten Seite (31) und einer der ersten Seite (31) gegenüberliegenden zweiten Seite (32),
- eine erste Schicht (10), die auf der ersten Seite (31) des Substrats (30) angeordnet ist, wobei die erste Schicht (10) die erste Linsenoberfläche (11.1) des lichtbrechenden optischen Elements (1) umfasst,
wobei das Substrat (30) in einem Wellenlängenbereich von 6 µm bis 15 µm einen geringeren Absorptionskoeffizienten aufweist als die erste Schicht (10) aufweist, **dadurch gekennzeichnet, dass** der Absorptionskoeffizient des Substrats (30) in dem genannten Wellenlängenbereich mindestens doppelt so klein ist wie der Absorptionskoeffizient der ersten Schicht (10), wobei der Brechungsindex der ersten Schicht (10) und der Brechungsindex des Substrats (30) um nicht mehr als 0,6 voneinander abweichen.

2. Das lichtbrechende optische Element (1) nach Anspruch 1, wobei das lichtbrechende optische Element (1) eine zweite Schicht (20) umfasst, die auf der zweiten Seite (32) des Substrats (30) angeordnet ist, wobei die zweite Schicht (20) eine zweite Linsenoberfläche (22) des lichtbrechenden optischen Elements (1) umfasst, wobei das Substrat (30) im Wellenlängenbereich einen geringeren Absorptionskoeffizienten aufweist als die zweite Schicht (20).

3. Das lichtbrechende optische Element (1) nach Anspruch 2, wobei der Absorptionskoeffizient des Substrats (30) in dem genannten Wellenlängenbereich mindestens halb so groß ist wie der Absorptionskoeffizient der zweiten Schicht (20).

4. Das lichtbrechende optische Element (1) gemäß einem der vorstehenden Ansprüche, wobei sich der Brechungsindex der ersten Schicht (10) und der Brechungsindex des Substrats (30) um nicht mehr als 0,42, insbesondere um nicht mehr als 0,2, unterscheiden und/oder wobei, falls das lichtbrechende optische Element (1) die zweite Schicht (20) umfasst, der Brechungsindex der zweiten Schicht (20) und der Brechungsindex des Substrats (30) um nicht mehr als 0,6, insbesondere nicht mehr als 0,42, insbesondere nicht mehr als 0,2 voneinander abweichen.

5. Das lichtbrechende optische Element (1) gemäß einem der vorstehenden Ansprüche, wobei ein chemisches Element, aus dem das Substrat (30) gebildet ist, aus der Gruppe bestehend aus einem der folgenden Elemente: Galliumarsenid, Indiumphosphid oder Germanium ausgewählt ist.

6. Das lichtbrechende optische Element (1) gemäß einem der vorstehenden Ansprüche, wobei eine chemische Verbindung, aus der die erste Schicht (10) gebildet ist, aus der Gruppe bestehend aus Silizium, Siliziumdioxid oder einer Mischung daraus ausgewählt ist, und/oder wobei, falls das lichtbrechende optische Element (1) die zweite Schicht (20) umfasst, eine chemische Verbindung, aus der die zweite Schicht (20) gebildet ist, aus der Gruppe bestehend aus Silizium, Siliciumdioxid oder einer Mischung daraus ausgewählt ist.

7. Das lichtbrechende optische Element (1) gemäß einem der vorstehenden Ansprüche, wobei eine Dicke (d10) der ersten Schicht (10) im Bereich von 0,05 mm bis 0,3 mm liegt und/oder wobei, falls das lichtbrechende optische Element (1) die zweite Schicht (20) umfasst, wobei eine Dicke (d20) der zweiten Schicht (20) im Bereich von 0,05 mm bis 0,3 mm liegt.

8. Das lichtbrechende optische Element (1) gemäß einem der vorstehenden Ansprüche, wobei die erste Linsenoberfläche (11.1) entweder eine konvexe oder eine konkave Oberfläche ist, insbesondere wobei die erste Linsenoberfläche (11.1) von der ersten Schicht (10) gebildet wird, und/oder wobei, falls das lichtbrechende optische Element (1) die zweite Schicht (20) umfasst, die zweite Linsenoberfläche (22.1) entweder eine konvexe oder eine konkave Oberfläche ist, insbesondere wobei die zweite Linsenoberfläche (22.1) von der zweiten Schicht (20) gebildet wird.

9. Das lichtbrechende optische Element (1) gemäß einem der vorstehenden Ansprüche, wobei die erste Linsenoberfläche (10) eine, zwei oder drei Einbuchtungen (11.2) der ersten Linsenoberfläche (11.1) umfasst, die so ausgebildet sind, dass sie eine Fresnel-Linsenoberfläche mit einer, zwei oder drei Einbuchtungen (11.2) bilden, und/oder wobei, falls das lichtbrechende optische Element (1) die zweite Schicht (20) umfasst, die zweite Linsenoberfläche (20) eine, zwei oder drei Einbuchtungen der zweiten Linsenoberfläche (22.1) umfasst, die so ausgebildet sind, dass sie eine Fresnel-Linsenoberfläche mit einer, zwei oder drei Einbuchtungen bilden.

10. Das lichtbrechende optische Element (1) gemäß einem der vorstehenden Ansprüche, wobei das lichtbrechende optische Element (1) ein Retroreflektor ist, wobei die zweite Seite (32) des Substrats (30) eine reflektierende Schicht aufweist, die eine reflektierende Oberfläche bildet.

11. Eine Anordnung (100) aus lichtbrechenden optischen Elementen (1), die eine Vielzahl der lichtbrechenden optischen Elemente (1) gemäß einem der vorstehenden Ansprüche umfasst, wobei die Substrate (30) der Vielzahl der lichtbrechenden optischen Elemente (1) der Anordnung (100) als ein einziges Substratstück ausgebildet sind und wobei die ersten Schichten (10) der Vielzahl der lichtbrechenden optischen Elemente (1) der Anordnung (100) als ein einziges erstes Schichtstück ausgebildet sind, und/oder wobei, falls die lichtbrechenden optischen Elemente (1) zweite Schichten (20) umfassen, die zweiten Schichten (20) der mehreren lichtbrechenden optischen Elemente (1) der Anordnung (100) als ein einziges zweites Schichtstück ausgebildet sind.

12. Das Array (100) nach Anspruch 11, wobei das erste Schichtstück ein erster Wafer ist, dessen Oberfläche bearbeitet wurde, um die ersten Linsenoberflächen (11.1) der Vielzahl von lichtbrechenden optischen Elementen (1) zu bilden, und wobei das Substratstück ein zweiter Wafer ist, und/oder wobei, falls die lichtbrechenden optischen Elemente (1) die zweiten Schichten (20) umfassen, das zweite Schichtstück ein dritter Wafer ist, dessen Oberfläche so bearbeitet wurde, dass die zweiten Linsenoberflächen (22.1) der Vielzahl von lichtbrechenden optischen Elementen (1) gebildet wurden.

13. Ein Verfahren zur Herstellung eines oder mehrerer der lichtbrechenden optischen Elemente (1) gemäß einem der Ansprüche 1 bis 10 oder des Arrays (100) mit einer Vielzahl der lichtbrechenden optischen Elemente (1) gemäß einem der Ansprüche 11 bis 12, wobei das Verfahren die folgenden Schritte umfasst:
- Bereitstellen eines ersten Wafers, der aus dem Material der ersten Schicht (10) des lichtbrechenden optischen Elements (1) besteht, wobei der erste Wafer eine erste Seite und eine der ersten Seite gegenüberliegende zweite Seite aufweist,
- Bereitstellen eines zweiten Wafers, der aus dem Material des Substrats des lichtbrechenden optischen Elements (1) besteht, wobei der zweite Wafer eine erste und eine zweite Seite aufweist;
- Verbinden des ersten Wafers mit seiner zweiten Seite an die erste Seite des zweiten Wafers, so dass der erste und der zweite Wafer fest miteinander verbunden sind und insbesondere die erste Grenzfläche (I1) des lichtbrechenden optischen Elements (1) bilden;
- Anwenden eines reaktiven Ionenätzverfahrens (RIE) auf die erste Seite des ersten Wafers, so dass eine Vielzahl von ersten Linsenoberflächen (11) aus der ersten Seite des ersten Wafers geätzt wird, um die Vielzahl von Brechungselementen des Arrays (100) zu bilden, wobei der Verbindungsschritt dem reaktiven Ionenätzen vorausgehen oder nach diesem erfolgen kann.

14. Das Verfahren nach Anspruch 13, das ferner die folgenden Schritte umfasst:
- Bereitstellen eines dritten Wafers, der aus dem Material der zweiten Schicht (20) des lichtbrechenden optischen Elements (1) besteht, wobei der dritte Wafer eine erste Seite und eine der ersten Seite gegenüberliegende zweite Seite aufweist,
- Verbinden des dritten Wafers mit seiner ersten Seite an die zweite Seite des zweiten Wafers, sodass der dritte und der zweite Wafer fest miteinander verbunden sind und dabei insbesondere die zweite Grenzfläche (I2) des lichtbrechenden optischen Elements (1) bilden;
- Anwenden des reaktiven Ionenätzverfahrens (RIE) auf die zweite Oberfläche des dritten Wafers, so dass eine Vielzahl von zweiten Linsenoberflächen (22.1) von der zweiten Seite des dritten Wafers geätzt wird, um die Vielzahl von lichtbrechenden Elementen (1) des Arrays zu bilden, wobei insbesondere die erste und die zweite Linsenoberfläche (11.1, 22.1) entlang der optischen Achsen (OA) der lichtbrechenden optischen Elemente (1) zusammentreffen, wobei der Verbindungsschritt dem reaktiven Ionenätzen vorausgehen oder darauf folgen kann.

15. Ein Quantenkaskadenlaser mit externem Resonator, der das lichtbrechende optische Element (1) gemäß einem der Ansprüche 1 bis 10 umfasst, wobei das lichtbrechende optische Element (1) als Retroreflektor ausgebildet ist.

## Revendications

1. Élément optique réfractif (1), en particulier une microlentille ou un rétroréflecteur pour un laser, dans lequel l'élément optique réfractif (1) a un axe optique (OA) et une première surface de lentille (11.1), dans lequel l'élément optique réfractif (1) comprend en outre :
- un substrat (30) ayant un premier côté (31) et un second côté (32) opposé au premier côté (31),
- une première couche (10) agencée sur le premier côté (31) du substrat (30), dans lequel la première couche (10) comprend la première surface de lentille (11.1) de l'élément optique réfractif (1),
dans lequel, dans une plage de longueurs d'onde allant de 6 µm à 15 µm, le substrat (30) a un coefficient d'absorption inférieur à celui de la première couche (10),
**caractérisé en ce que** le coefficient d'absorption du substrat (30) dans ladite plage de longueurs d'onde est au moins deux fois inférieur au coefficient d'absorption de la première couche (10), et **en ce qu'**un indice de réfraction de la première couche (10) et un indice de réfraction du substrat (30) diffèrent d'au plus 0,6.

2. Élément optique réfractif (1) selon la revendication 1, dans lequel l'élément optique réfractif (1) comprend une seconde couche (20) agencée sur le second côté (32) du substrat (30), dans lequel la seconde couche (20) comprend une seconde surface de lentille (22) de l'élément optique réfractif (1), dans lequel, dans la plage de longueurs d'onde, le substrat (30) a un coefficient d'absorption inférieur à celui de la seconde couche (20).

3. Élément optique réfractif (1) selon la revendication 2, dans lequel le coefficient d'absorption du substrat (30) dans ladite plage de longueurs d'onde est au moins deux fois inférieur au coefficient d'absorption de la seconde couche (20).

4. Élément optique réfractif (1) selon l'une quelconque des revendications précédentes, dans lequel un indice de réfraction de la première couche (10) et un indice de réfraction du substrat (30) diffèrent d'au plus 0,42, plus particulièrement d'au plus 0,2, et/ou dans lequel, dans le cas où l'élément optique réfractif (1) comprend la seconde couche (20), un indice de réfraction de la seconde couche (20) et un indice de réfraction du substrat (30) diffèrent d'au plus 0,6, en particulier d'au plus 0,42, plus particulièrement d'au plus 0,2.

5. Élément optique réfractif (1) selon l'une quelconque des revendications précédentes, dans lequel un élément chimique constituant le substrat (30) est choisi parmi le groupe constitué de l'un des éléments suivants : arséniure de gallium, phosphure d'indium ou germanium.

6. Élément optique réfractif (1) selon l'une quelconque des revendications précédentes, dans lequel un composé chimique constituant la première couche (10) est choisi parmi le groupe constitué de silicium, dioxyde de silicium ou un mélange de ceux-ci, et/ou dans lequel, dans le cas où l'élément optique réfractif (1) comprend la seconde couche (20), un composé chimique constituant la seconde couche (20) est choisi parmi le groupe constitué de silicium, dioxyde de silicium ou un mélange de ceux-ci.

7. Élément optique réfractif (1) selon l'une quelconque des revendications précédentes, dans lequel une épaisseur (d₁₀) de la première couche (10) est comprise dans la plage allant de 0,05 mm à 0,3 mm, et/ou dans lequel, dans le cas où l'élément optique réfractif (1) comprend la seconde couche (20), une épaisseur (d₂₀) de la seconde couche (20) est comprise dans la plage allant de 0,05 mm à 0,3 mm.

8. Élément optique réfractif (1) selon l'une quelconque des revendications précédentes, dans lequel la première surface de lentille (11.1) est une surface soit convexe, soit concave, en particulier dans lequel la première surface de lentille (11.1) est comprise dans la première couche (10), et/ou dans lequel, dans le cas où l'élément optique réfractif (1) comprend la seconde couche (20), la seconde surface de lentille (22.1) est une surface soit convexe, soit concave, en particulier dans lequel la seconde surface de lentille (22.1) est comprise dans la seconde couche (20).

9. Élément optique réfractif (1) selon l'une quelconque des revendications précédentes, dans lequel la première surface de lentille (10) comprend un, deux ou trois décrochements (11.2) de la première surface de lentille (11.1) configurés pour former une surface de lentille de Fresnel ayant un, deux ou trois décrochements (11.2), et/ou dans lequel, dans le cas où l'élément optique réfractif (1) comprend la seconde couche (20), la seconde surface de lentille (20) comprend un, deux ou trois décrochements de la seconde surface de lentille (22.1) configurés pour former une surface de lentille de Fresnel ayant un, deux ou trois décrochements.

10. Élément optique réfractif (1) selon l'une quelconque des revendications précédentes, dans lequel l'élément optique réfractif (1) est un rétroréflecteur, dans lequel le second côté (32) du substrat (30) comprend une couche réfléchissante formant une surface réfléchissante.

11. Réseau (100) d'éléments optiques réfractifs (1) comprenant une pluralité des éléments optiques réfractifs (1) selon l'une quelconque des revendications précédentes, dans lequel les substrats (30) de la pluralité d'éléments optiques réfractifs (1) du réseau (100) sont formés d'une seule pièce de substrat et dans lequel les premières couches (10) de la pluralité d'éléments optiques réfractifs (1) du réseau (100) sont formées d'une seule pièce de première couche, et/ou dans lequel, dans le cas où les éléments optiques réfractifs (1) comprennent les secondes couches (20), les secondes couches (20) de la pluralité d'éléments optiques réfractifs (1) du réseau (100) sont formées d'une seule pièce de seconde couche.

12. Réseau (100) selon la revendication 11, dans lequel la pièce de première couche est une première tranche dont la surface a été traitée pour former les premières surfaces de lentille (11.1) de la pluralité d'éléments optiques réfractifs (1), et dans lequel la pièce de substrat est une seconde tranche, et/ou dans lequel, dans le cas où les éléments optiques réfractifs (1) comprennent les secondes couches (20), la pièce de seconde couche est une troisième tranche dont la surface a été traitée pour former les secondes surfaces de lentille (22.1) de la pluralité d'éléments optiques réfractifs (1).

13. Procédé de fabrication d'un ou plusieurs des éléments optiques réfractifs (1) selon l'une quelconque des revendications 1 à 10 ou du réseau (100) avec une pluralité des éléments optiques réfractifs (1) selon l'une quelconque des revendications 11 à 12, le procédé comprenant les étapes suivantes :
- la fourniture d'une première tranche constituée du matériau de la première couche (10) de l'élément optique réfractif (1), la première tranche ayant un premier côté et un second côté opposé au premier côté,
- la fourniture d'une seconde tranche constituée du matériau du substrat de l'élément optique réfractif (1), la seconde tranche ayant un premier côté et un second côté ;
- la liaison de la première tranche avec son second côté au premier côté de la seconde tranche, de telle sorte que la première et la seconde tranche sont fixées l'une à l'autre, formant en particulier la première interface (I1) de l'élément optique réfractif (1) ;
- l'application d'un procédé de gravure ionique réactive (RIE) au premier côté de la première tranche, de telle sorte qu'une pluralité de premières surfaces de lentille (11) est gravée à partir du premier côté de la première tranche de manière à former la pluralité d'éléments réfractifs du réseau (100), dans lequel l'étape de liaison peut précéder ou peut suivre la gravure ionique réactive.

14. Procédé selon la revendication 13, comprenant en outre les étapes suivantes :
- la fourniture d'une troisième tranche constituée du matériau de la seconde couche (20) de l'élément optique réfractif (1), la troisième tranche ayant un premier côté et un second côté opposé au premier côté,
- la liaison de la troisième tranche avec son premier côté au second côté de la seconde tranche, de telle sorte que la troisième tranche et la seconde tranche sont fixées l'une à l'autre, formant en particulier la seconde interface (I2) de l'élément optique réfractif (1) ;
- l'application du procédé de gravure ionique réactive (RIE) à la seconde surface de la troisième tranche, de telle sorte qu'une pluralité de secondes surfaces de lentille (22.1) est gravée à partir du second côté de la troisième tranche de manière à former la pluralité d'éléments réfractifs (1) du réseau, en particulier dans lequel les première et seconde surfaces de lentille (11.1, 22.1) coïncident le long des axes optiques (OA) des éléments optiques réfractifs (1), dans lequel l'étape de liaison peut précéder ou peut suivre la gravure ionique réactive.

15. Laser à cascade quantique à cavité externe comprenant l'élément optique réfractif (1) selon l'une quelconque des revendications 1 à 10, dans lequel l'élément optique réfractif (1) est formé comme un rétroréflecteur.
